# EUROPÄISCHE PATENTSCHRIFT

(11) **EP 0 402 489 B1**
(45) Veröffentlichungstag und Bekanntmachung des Hinweises auf die Patenterteilung: **31.03.1993**
(21) Anmeldenummer: 89110507.4
(22) Anmeldetag: 10.06.1989
(51) Int. Cl.: B60R 22/34

(54) **Anordnung zur Befestigung eines Gurtbandes an einer Welle eines Sicherheitsgurtaufrollers**
Arrangement for fastening a belt to a shaft in a safety belt retractor
Disposition pour attacher une sangle à un arbre dans un enrouleur de ceinture de sécurité

(43) Veröffentlichungstag der Anmeldung: 19.12.1990
(73) Patentinhaber: TRW REPA GMBH, 73553 Alfdorf (DE)
(72) Erfinder: Schmid, Johannes, D-7070 Schwäbisch Gmund-Hussenhofen (DE); Kielwein, Thomas, D-7078 Leinzell (DE)
(74) Vertreter: Degwert, Hartmut, Dipl.-Phys.

(56) Entgegenhaltungen:
- EP-A- 0 252 834
- DE-A- 2 556 409
- DE-A- 2 802 031
- FR-A- 2 331 942

## Beschreibung

Die Erfindung betrifft eine Anordnung zur Befestigung eines Gurtbandes an einer Welle eines Sicherheitsgurtaufrollers, die einen axialen Schlitz aufweist, durch den das Gurtband hindurchgeführt ist, wobei das Gurtband um einen durch den axialen Schlitz abgegrenzten Steg herumgelegt ist, bevor es auf den Kern der Welle aufgewickelt wird.

Eine Anordnung dieser Gattung ist aus der FR-A 2 331 942 bekannt. Das dort beschriebene Befestigungselement für ein Gurtband weist eine Welle auf, die durch zwei parallel verlaufende, schmale Schlitze in drei Teile geteilt ist. Das Gurtband wird zunächst durch einen ersten Schlitz geführt und dann um den von dem zweiten Schlitz abgegrenzten äußeren Teil der Welle gelegt. Anschließend wird das Gurtband durch den zweiten Schlitz geführt, wonach es in entgegengesetzter Richtung nochmals durch den ersten Schlitz geführt wird. Bei einer solchen Anordnung ist keine Naht erforderlich, um das Gurtband mit ausreichender Sicherheit an der Welle des Gurtaufrollers zu befestigen. Auch wird kein zusätzliches Befestigungselement benötigt, um das Ende des Gurtbandes an der Welle festzulegen. Diese Anordnung besitzt jedoch den Nachteil, daß die Montage des Gurtbandes umständlich ist.

Der Erfindung liegt die Aufgabe zugrunde, eine Anordnung zur Befestigung eines Gurtbandes an einer Welle eines Sicherheitsgurtaufrollers zu schaffen, bei der sich sowohl eine Naht des Gurtbandes als auch zusätzliche Teile wie Klammern, Klemmstücke oder dergleichen erübrigen, und die Montage daher vereinfacht wird.

Diese Aufgabe wird bei einer Anordnung der eingangs angegebenen Art erfindungsgemäß dadurch gelöst, daß der Kern der Welle durch zwei von dem axialen Schlitz begrenzte Stege gebildet wird und das Gurtband an seinem Ende in eine am Außenumfang des einen Steges der Welle angebrachte Nut eingesteckt und mit wenigstens zwei Windungen um diesen Steg herumgelegt ist. Bei der erfindungsgemäßen Anordnung wird das Gurtbandende in der Nut des einen Steges mit nur mäßiger Kraft gehalten. Da das Gurtband anschließend mit wenigstens zwei Windungen um den Steg herumgelegt wird, tritt zusätzlich eine Umschlingungsreibung auf, durch die die Haltekraft, mit der das Gurtbandende in der Nut gehalten wird, nach einer exponentiellen Gesetzmäßigkeit verstärkt wird, in die der Umschlingungswinkel als Exponent eingeht. Mit lediglich zwei Windungen wird bereits eine Haltekraft erzielt, die üblichen Prüfbedingungen genügt. Ein Abwickeln der Windungen von dem Steg ist nicht möglich, da das Gurtband zur Vervollständigung der zwei oder mehr Windungen auf dem einen Steg wieder durch den axialen Schlitz zwischen beiden Stegen hindurchgeführt werden muß und infolgedessen das Ende der den Steg umgebenden Windungen in dem axialen Schlitz gehalten ist.

Um einen gleichmäßigen Wicklungsaufbau zu gewährleisten, weist der Steg, um den das Gurtband mit wenigstens zwei Windungen herumgelegt ist, einen gegenüber dem anderen Steg der Welle um soviel verminderten Außendurchmesser auf, daß der Außendurchmesser des von mehreren Gurtbandlagen umgebenen Steges annähernd gleich dem Außendurchmesser des anderen Steges ist.

Von Vorteil ist weiterhin, wenn gemäß einer bevorzugten Ausführungsform die Nut, in welche das Gurtbandende eingesteckt ist, parallel zu dem axialen Schlitz verläuft. Auf diese Weise lassen sich durch zweimaliges Herumlegen des Gurtbandes um den betreffenden Steg nahezu zwei vollständige Windungen realisieren.

Ferner ist bei der bevorzugten Auführungsform das Gurtbandende in die Nut eingepreßt, was durch eine im Querschnitt leicht V-förmige Gestaltung der Nut erleichtert wird.

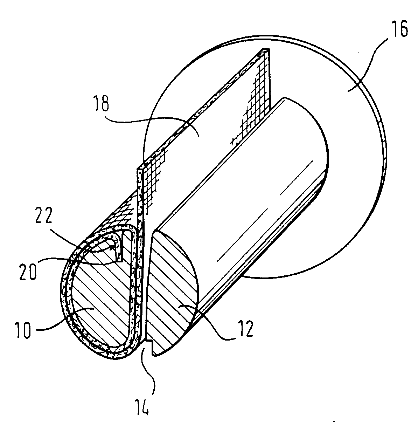

Eine bevorzugte Ausführungsform der Erfindung wird nun unter Bezugnahme auf die Zeichnung näher beschrieben. Die einzige Figur der Zeichnung zeigt eine teilweise im Schnitt wiedergegebene schematische Darstellung der Welle eines Sicherheitsgurtaufrollers mit dem daran befestigten Gurtbandende.

Die zwei Stege 10, 12 der Welle eines Gurtaufrollers sind durch einen durchgehenden axialen Schlitz 14 voneinander getrennt. An den beiden Enden der Welle befindet sich jeweils ein Flansch 16. Das Gurtband 18 verläuft durch den axialen Schlitz 14 und ist mit zwei Windungen um den Steg 10 herumgelegt. Das mit 20 bezeichnete Ende des Gurtbandes ist in eine axiale Nut 22 des Steges 10 eingesteckt. Die axiale Nut 20 verläuft parallel zu dem axialen Schlitz 14 und ist im Querschnitt leicht V-förmig gestaltet, so daS das Gurtbandende in die Nut eingepreßt werden kann. Der Außendurchmesser des Steges 10 ist etwas kleiner als der des Steges 12, um die beiden Gurtbandlagen zu berücksichtigen, so daß der Steg 10 mit den beiden Gurtbandlagen und der Steg 12 annähernd denselben Außendurchmesser aufweisen. Wie aus der Zeichnung ohne weiteres ersichtlich ist, werden zur Befestigung des Gurtbandes an der Welle keine besonderen Teile benötigt, wodurch nicht nur der Bauteileaufwand vermindert, sondern auch die Montage erleichtert wird.

## Patentansprüche

1. Anordnung zur Befestigung eines Gurtbandes (18) an einer Welle eines Sicherheitsgurtaufrollers, die einen axialen Schlitz (14) aufweist, durch den das Gurtband hindurchgeführt ist, wobei das Gurtband (18) um einen durch den axialen Schlitz (14) abgegrenzten Steg (10) herumgelegt ist, bevor es auf den Kern der Welle aufgewickelt wird, **dadurch gekennzeichnet,** daß der Kern der Welle durch zwei von dem Schlitz (14) begrenzte Stege (10, 12) gebildet ist und das Gurtband an seinem Ende (22) in eine am Außenumfang des einen Steges (10) der Welle angebrachte Nut (20) eingesteckt und mit wenigstens zwei Windungen um diesen Steg (10) herumgelegt ist.

2. Anordnung nach Anspruch 1, **dadurch gekennzeichnet,** daß der Steg (10), um den das Gurtband mit wenigstens zwei Windungen herumgelegt ist, einen gegenüber dem anderen Steg (12) der Welle um soviel verminderten Außendurchmesser aufweist, daß der Außendurchmesser des von mehreren Gurtbandlagen umgebenen Steges (10) annähernd gleich dem Außendurchmesser des anderen Steges (12) ist.

3. Anordnung nach Anspruch 1 oder 2, **dadurch gekennzeichnet,** daß die Nut (20) parallel zu dem axialen Schlitz verläuft.

4. Anordnung nach einem der vorstehenden Ansprüche, **dadurch gekennzeichnet,** daß das Gurtbandende in die im Querschnitt annähernd V-förmige Nut (20) eingepreßt ist.

## Claims

1. An arrangement for securing a safety belt webbing (18) on the shaft of a safety belt retractor, the shaft comprising an axial slot (14) the belt webbing is led through, said webbing (18) being laid around a web (10) defined by the axial slot (14) before it is coiled on the core of the shaft, characterized in that the core of the shaft is formed by two webs (10, 12) defined by the slot (14) and the end (22) of the belt webbing is inserted in a groove (20) provided in the outer periphery of one (10) of the webs of the shaft and the belt webbing is laid around this web (10) with at least two windings.

2. An arrangement according to claim 1, characterized in that the web (10) around which the belt webbing is laid to have at least two windings has an outer diameter smaller than that of the other web (12) of the shaft so that the outer diameter of the web (10) being surrounded by several belt webbing layers is approximately equal to the outer diameter of the other web (12).

3. An arrangement according to claim 1 or 2, characterized in that the groove (20) extends parallel with respect to the axial slot.

4. An arrangement according to any of the preceding claims, characterized in that the end of the belt webbing is pressed into the groove (20) which approximately has a V-shaped cross-section.

## Revendications

1. Montage de fixation d'une sangle (18) sur l'arbre d'un enrouleur de ceinture de sécurité, cet arbre comprenant une fente axiale (14) par laquelle passe la sangle et la sangle (18) étant placée autour d'une aile (10) délimitée par la fente axiale (14) avant d'être enroulée sur l'âme de l'arbre, caractérisé en ce que l'âme de l'arbre est formée de deux ailes (10, 12) délimitées par la fente (14) et l'extrémité (22) de la sangle est insérée dans une rainure (20) réalisée à la périphérie de l'une (10) des ailes de l'arbre, cette sangle étant enroulée autour de cette aile (10) de manière à former au moins deux spires.

2. Montage selon la revendication 1, caractérisé en ce que l'aile (10), autour de laquelle la sangle est enroulée en formant au moins deux spires, a un diamètre extérieur qui est suffisamment réduit par rapport à celui de l'autre aile (12) de l'arbre pour que le diamètre extérieur de l'aile (10) et de l'enroulement sur elle de plusieurs couches de sangle soit approximativement égal au diamètre extérieur de l'autre aile (12).

3. Montage selon la revendication 1 ou 2, caractérisé en ce que la rainure (20) est parallèle à la fente axiale.

4. Montage selon l'une des revendications précédentes, caractérisé en ce que l'extrémité de la sangle est comprimée dans la rainure (20) qui a une section approximativement en V.
